# EUROPEAN PATENT SPECIFICATION

(11) **EP 3 887 231 B1**
(45) Date of publication and mention of the grant of the patent: **09.10.2024**
(21) Application number: 19889303.4
(22) Date of filing: 16.08.2019
(51) Int. Cl.: B60P 1/28, B62D 25/20, B62D 29/00, B62D 33/027

(54) **PLUGGABLE DAMPER FLOOR PROFILE**
STECKBARES DÄMPFERBODENPROFIL
PROFIL DE PLANCHER D'AMORTISSEURS ENFICHABLE

(30) Priority: 28.11.2018 TR 201818098
(43) Date of publication of application: 06.10.2021
(73) Proprietor: Tirsan Treyler Sanayi Ve Ticaret Anonim Sirketi, 54010 Arifiye/Sakarya (TR)
(72) Inventor: D NDAR, Seyit, Arifiye/Sakarya (TR)
(74) Representative: Yamankaradeniz, Kemal
(86) International application number: PCT/TR2019/050687
(87) International publication number: WO 2020/112052

(56) References cited:
- DE-U1- 29 606 451
- GB-A- 2 419 573
- GB-A- 2 529 745
- GB-A- 2 529 745
- TR-A2- 201 809 313
- TR-A2- 201 815 826
- US-A- 5 054 253
- US-A- 5 351 990
- US-A1- 2018 334 195
- US-B1- 7 575 264

## Description

### FIELD OF THE INVENTION

The invention consists mainly of the floor profiles of the aluminum box type dumpers, having a pluggable construction used for the transportation of the construction materials, excavation and ruin waste and fine granular materials for mining in the main road and off-road conditions.

### BACKGROUND OF THE INVENTION

Currently, the floor of the dumper vessel consists of a floor sheet and supporting crosses welded at full length of the lower part of the sheet. Supporting crosses are designed as open "V" or "U" shapes and are used to increase the strength of the dumper vessel. As mentioned reinforcement crossings have an open end, bevel ends are applied to the crosses after the welding method, thus crosses are deformed.

The current method consists of welding the floor sheet located on the lower floor of the dumper vessel with the supporting crosses mounted on the lower surface of the floor sheet. In case of inconveniences in the above-mentioned method, the dumper vessel can be overloaded; cracks can occur on floor crosses and floor sheets, which can lead to deformations.

In addition, in case the distance between the floor supporting cross and the floor sheet is excessive, due to the fact that the welding between reinforcements is done without any extra reinforcement, permanent deflections and deformations occur in the floor sheets due to the load effect. Above mentioned deformations are pot-shaped and cause the weight to stick to the inner surface of the dumper vessel and prevent the effective discharge of the load. The adherence of the transported weight with the dumper vessel creates an imbalance each time the dumper is being raised and thus increases the risk of tipping over of the weight. Also, as all the weight can not be unloaded, the vehicle's curb weight and thus the fuel consumption are increased.

In addition, since the floor sheets and the floor reinforcement crosses are joined by welding, in case of possible damage, floor sheets are patch-welded, or the sheet is replaced. Patching will cause extra costs and an increase in the weight of the vehicle, and in case of sheet change, costs and workmanship will be increased.

Utility model/patent application with EP3210860 application number discovered after the technical investigations is related with a construction including at least one dumper panel, and a profile connection connecting the panel connection to another panel, pole and/or a rear wall frame. As you can see, there is not any advance about the reinforcement crosses mounted to the dumper floor panel lower surface in the above-mentioned application.

Another application discovered after the technical investigations with DE1860902 application number is related with the side frame disposed on the long edges of the support crossings to be used for overlapping the joining edges of the support crossings. As you can see, there is not any advance about the mounting on the panel of the supporting crosses mounted to the dumper floor panel lower surface and about the floor panel in the above-mentioned application.

Furthermore, floor profiles having a pluggable construction are known e.g. from DE 296 06 451 U1 and TR 2018 15826 A2.

As a result, many improvements are implemented in dumper floor panel structures, thus new constructions are needed in order to eliminate the above-mentioned disadvantages and solve the existing problems.

### OBJECT OF THE INVENTION

The presented invention is related to a dumper floor profile meeting the above-mentioned requirements, eliminating all disadvantages and introducing some additional advantages.

The main purpose of the invention is to provide a long-lasting dumper floor profile with high strength by eliminating the necessity of a welding application between the floor sheet and the floor crossing and thus eliminating any possible deformations arising from the welding application.

Another purpose of this invention is to provide a panel with low labor cost which is faster to repair in possible modification cases thanks to the hot-plug application not requiring any additional repairing part and the base elements joined with the interlocking method.

Another purpose of this invention is opening the ends of the crosses and preventing any possible faux pas in the floor sheet thanks to the shapes of the supporting crosses.

Another purpose of the invention is to provide a lighter and easy-to-install dumper floor profile capable of providing the same level of strength with less and lighter floor supporting crosses by ensuring a strength advantage thanks to the section structure of the floor.

The above-mentioned invention which will be detailed below, is a dumper floor panel structure with a dumper vessel storing and carrying the load and a lower belt for connecting the dumper vessel floor to the side panels, wherein, the invention relates to at least one lower profile and one upper floor profile supporting the dumper vessel from the lower part of the vessel to provide it some strength, and a floor panel created by engaging one lower and one upper floor profile thanks to their shapes.

The structural and characteristic properties of the invention, along with all the advantages can be more clearly understood thanks to the figures below and the related detailed explanations. Which is why an evaluation shall be made considering those figures and detailed explanations.

### SHORT DESCRIPTION OF THE FIGURES

In order to best understand the advantages of the current invention along with the additional components, the invention shall be evaluated along with the figures described below.
Figure 1 is the perspective view of the dumper vessel, in which the dumper floor profiles of the invention are used.

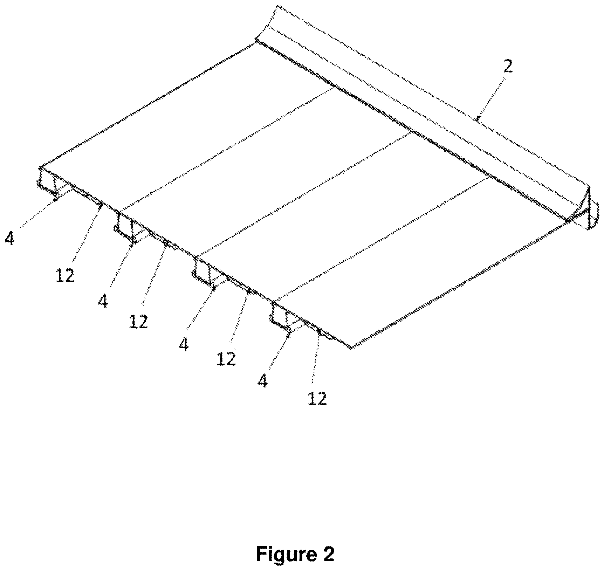

Figure 2 is the top perspective view of the dumper floor profiles of the invention.
Figure 3 is a front view of the dumper floor profile of the invention.

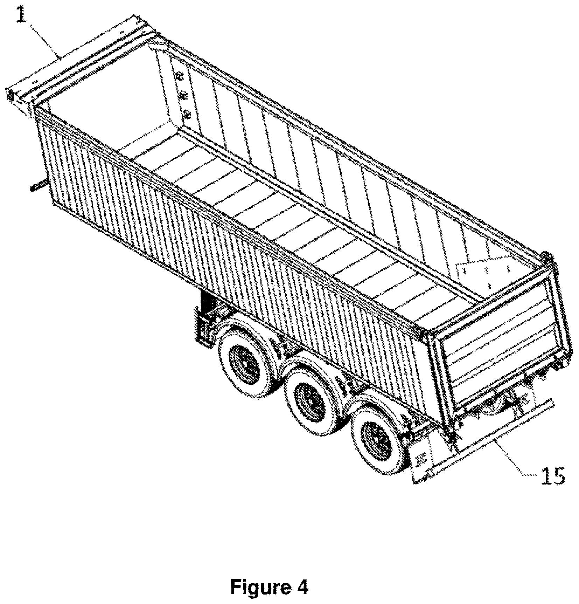

Figure 4 is the perspective view of the vehicle with dumper, in which the dumper floor profiles of the invention are used.
Figure 5 is a front view of an alternative structure of the invention, in which the impact dampener elastic wedge is used.

### REFERENCE NUMBERS

1.The dumper vessel
2.The lower belt
3.The floor profile
4.The elastic wedge
5.The homing lower recess
6. The homing middle protrusion
7.The homing upper recess
8.The homing lower protrusion
9.The homing middle recess
10. The homing upper protrusion
11.The floor profile body
12.The intermediate cross
13.The wedge surface
14.The wedge homing protrusion
15.The dumper chassis
16. The intermediate cross reinforcement

### DETAILED DESCRIPTION OF THE INVENTION

In this detailed explanation, the preferred structures of the dumper floor profile (3) of the invention are explained, only in order to better understand the subject matter of the invention without creating any restrictive effect.

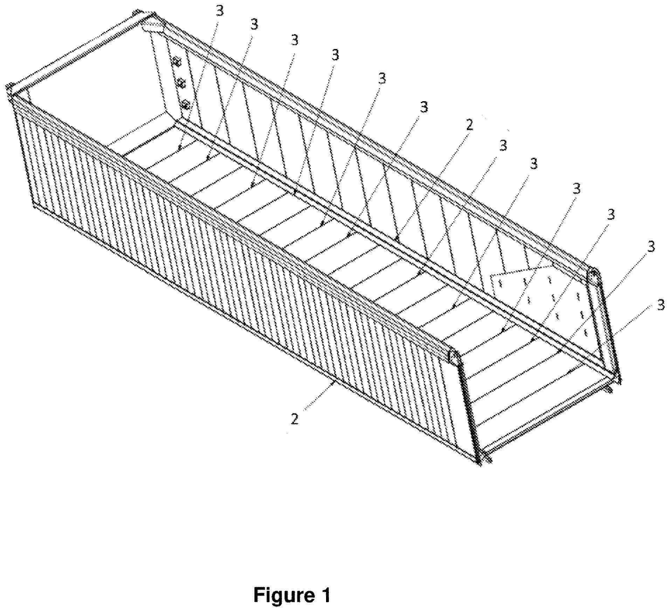

Figure 1 shows the perspective view of the dumper vessel (1), in which the dumper floor profiles (3) of the invention are used. Aluminum box type dumper vehicle comprises the dumper vessel (2) and the dumper chassis (13). The dumper vessel (2) consists of at least one lower fascia (2) located on the vehicle bottom surface, at least one floor profile (5) located on the vehicle bottom surface and the vehicle side edges; and it is the part located on top of the dumper vehicle, in which the materials to be transported are placed in, and the load is stored and transported. The lower fascia (2), which makes sure the horizontal and vertical forces created by the load are carried, and the floor profile (4) is borne to the dumper vessel (1) and connected to the other side panels, and the floor profile (3) are attached together by weld bonding method.

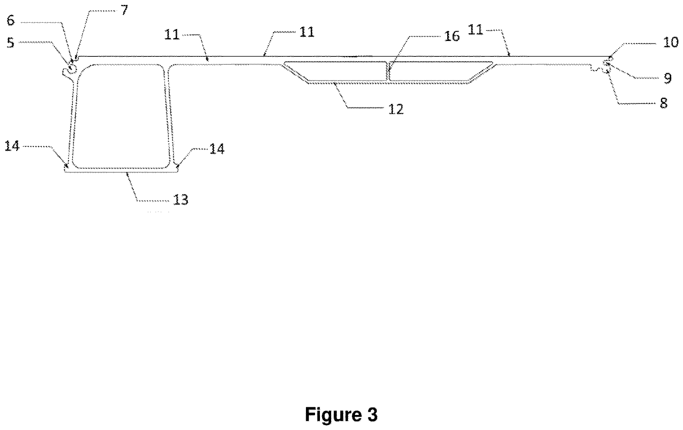

Figure 3 shows a front view of the dumper floor profile (3) of the invention.

Accordingly, the floor profile (3) contains more than one floor profile bodies (11), which house the other components on, at the side, or beneath themselves, and bear the impact abrasion and force effect by bearing the load on themselves; at least one homing lower recess (5), the homing lower protrusion (8), the homing middle protrusion (6), the homing upper recess (7), and the homing upper protrusion (10) created on the sides of the floor profile body (11); and at least one intermediate cross (12) at least one wedge surface (13), at least one intermediate cross reinforcement (16), and at least one wedge homing protrusion (14) created on the bottom surface of the floor profile body (11).

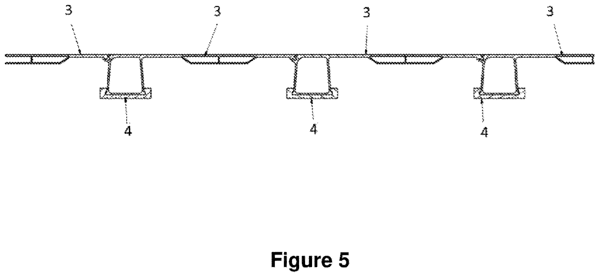

As indicated in Figure 5, according to the invention, the elastic wedge (4) serves as the impact dampener between the aluminum box type dumper vessel (1) and the dumper chassis (13); the dumper chassis (13) and the dumper vessel (1) do not contact one another thanks to the impact effect of the load and the route, thus preventing these two components from mechanically damaging one another. The elastic wedge (4) is attached to the floor profile (3) by the interlocking method thanks to the geometric shape of the wedge homing protrusion (14) created below the floor profile body (11), and smoothly seated on the wedge surface (13) on the lower surface of the wedge homing protrusion (14). Thereby, the elastic wedge (4) is fixed to the dumper vessel (1) so that it cannot move horizontal and vertical directions.

The intermediate cross (12) supports the floor profile (3) with regard to reinforcement and resistance, and by preventing its deflection under load effect, prevents the load in the dumper vessel (1) to adhere inside of the dumper vessel (1) because of the deflection. In an embodiment of the invention, the part of the floor profile body (11), in which the intermediate cross (12) is formed has a thinner structure compared to the other zones. This prevents faux pas and deformation to the floor profile (3), supports its resistance, and reduces its weight.

The intermediate cross reinforcement (16) located underneath the floor profile body (11) ensures that the intermediate cross (12) is reinforced. The intermediate cross (12) and the intermediate cross reinforcement (16) was produced in a rectangular shape and longitudinally with the extrusion method, and it has protrusions and recesses, which make sure it is intertwined with the floor profile body (11).

More than one floor profile (3) and the floor profile body (11) are attached together by forming a bearing with the interlocking method using the form connection created by their geometrical structures. This form connection is completed by:
- connecting the homing lower recess (5) created at edge of the floor profile body (11) with the homing lower protrusion (8) located on another floor profile body (11),
- connecting the homing middle recess (9) created at edge of the floor profile body (11) with the homing middle protrusion (6) located on another floor profile body (11), and
- connecting the homing upper recess (7) created at edge of the floor profile body (11) with the homing upper protrusion (10) located on another floor profile body (11).

In this way, the dumper basin base created by connecting more than one floor profiles (11) is fixed so that it cannot carry out linear or rotational movement in horizontal and vertical directions.

The homing lower recess (5) and the homing lower protrusion (8), the homing middle recess (9) and the homing middle protrusion (6), the homing upper recess (7) and the homing upper protrusion (10) have a form, which makes it possible to connect them one another with the interlocking method.

## Claims

1. The floor profile (3) of the aluminum box type dumpers having a pluggable construction used for the transportation of the materials ***wherein it comprises;***
• more than one floor profile bodies (11), which bears the impact abrasion and force effect by bearing the load on themselves,
• at least one homing lower recess (5), which connects more than one floor profile bodies (11), created on the sides of the floor profile body (11),
• at least one homing lower protrusion (8) created on the sides of the floor profile body (11), which connects more than one floor profile bodies (11) with one another by joining with the homing lower recess (5),
• at least one homing upper recess (7), which connects more than one floor profile bodies (11), created on the sides of the floor profile body (11),
• at least one homing upper protrusion (10) created on the sides of the floor profile body (11), which connects more than one floor profile bodies (11) one another by joining with the homing upper recess (7),
• at least one homing middle recess (9), which connects more than one floor profile bodies (11), created on the sides of the floor profile body (11),
• at least one homing middle protrusion (6) created on the sides of the floor profile body (11), which connects more than one floor profile bodies (11) with one another by joining with the homing middle recess (9),
• at least one intermediate cross (12) located under the floor profile body (11), which supports the floor profile body (11) with regard to reinforcement and resistance, and prevents it's deflection under load effect, thus preventing the load to adhere inside of the dumper vessel.
• at least one intermediate cross reinforcement (16) located underneath the floor profile body (11), which ensures that the intermediate cross (12) is reinforced,
**characterised in that** the floor profile further comprises:
• a wedge homing protrusion (14) created below the floor profile body (11), which makes sure that an impact dampener element is fixed to the floor profile body (11) with the interlocking method,
• a wedge surface (13) located on the bottom surface of the wedge homing protrusion (14), and securing the impact dampener element

2. A dumper floor profile (3) according to claim 1, wherein it comprises the wedge homing protrusion (14), and an impact dampening elastic wedge (4) positioned underneath the wedge surface (13) between the dumper chassis and the dumper vessel.

3. A dumper floor profile (3) according to claim 1, wherein the part of the floor profile body (11), in which the intermediate cross (12) is formed has a thinner structure compared to the other zones.

## Patentansprüche

1. Bodenprofil (3) der Aluminium-Kastenkipper mit steckbarer Konstruktion, der zum Transport der Materialien verwendet wird, **wobei es umfasst;**
• mehrere Bodenprofilkörper (11), die die Stoß-, Abrieb- und Krafteinwirkung aufnehmen, indem sie die Last auf sich tragen,
• mindestens eine untere Führungsaussparung (5), die mehrere Bodenprofilkörper (11) verbindet und die an den Seiten des Bodenprofilkörpers (11) ausgebildet ist,
• mindestens einen unteren Führungsvorsprung (8), der an den Seiten des Bodenprofilkörpers (11) ausgebildet ist und mehrere Bodenprofilkörper (11) miteinander durch Zusammenfügen mit der unteren Führungsaussparung (5) verbindet,
• mindestens eine obere Führungsaussparung (7), die mehrere Bodenprofilkörper (11) verbindet und die an den Seiten des Bodenprofilkörpers (11) ausgebildet ist,
• mindestens einen oberen Führungsvorsprung (10), der an den Seiten des Bodenprofilkörpers (11) ausgebildet ist und mehrere Bodenprofilkörper (11) miteinander durch Zusammenfügen mit der oberen Führungsaussparung (7) verbindet,
• mindestens eine mittlere Führungsaussparung (9), die mehrere Bodenprofilkörper (11) verbindet und die an den Seiten des Bodenprofilkörpers (11) ausgebildet ist,
• mindestens einen mittleren Führungsvorsprung (6), der an den Seiten des Bodenprofilkörpers (11) ausgebildet ist und mehrere Bodenprofilkörper (11) miteinander durch Zusammenfügen mit der mittleren Führungsaussparung (9) verbindet,
• mindestens ein Zwischenkreuz (12), das sich unter dem Bodenprofilkörper (11) befindet und den Bodenprofilkörper (11) hinsichtlich Verstärkung und Festigkeit unterstützt und dessen Durchbiegung unter Lasteinwirkung verhindert und somit ein Anhaften der Ladung im Inneren des Kipperbehälters verhindert,
• mindestens eine Zwischenkreuzverstärkung (16), die sich unterhalb des Bodenprofilkörpers (11) befindet und sicherstellt, dass das Zwischenkreuz (12) verstärkt wird, **dadurch gekennzeichnet, dass** das Bodenprofil ferner umfasst:
• einen Keilführungsvorsprung (14), der unterhalb des Bodenprofilkörpers (11) ausgebildet ist und sicherstellt, dass ein Aufpralldämpferelement formschlüssig am Bodenprofilkörper (11) befestigt wird,
• eine Keiloberfläche (13), die sich an der Unterseite des Keilführungsvorsprungs (14) befindet und das Aufpralldämpferelement sichert.

2. Kipperbodenprofil (3) nach Anspruch 1, wobei es den Keilführungsvorsprung (14) und einen stoßdämpfenden elastischen Keil (4) umfasst, der unterhalb der Keiloberfläche (13) zwischen dem Kipperfahrgestell und dem Kipperbehälter positioniert ist.

3. Kipperbodenprofil (3) nach Anspruch 1, wobei der Teil des Bodenprofilkörpers (11), in dem das Zwischenkreuz (12) ausgebildet ist, im Vergleich zu den anderen Zonen eine dünnere Struktur aufweist.

## Revendications

1. Profil de plancher (3) des bennes basculantes de type boîte en aluminium comportant une construction enfichable utilisé pour le transport des matériaux, ***ledit profil de plancher comprenant** :*
• plusieurs corps (11) de profil de plancher, qui supportent l'effet de choc, d'abrasion et de force en supportant la charge sur eux-mêmes,
• au moins un évidement inférieur (5) de guidage, qui relie plusieurs corps (11) de profil de plancher, créé sur les côtés du corps (11) de profil de plancher,
• au moins une saillie inférieure (8) de guidage créée sur les côtés du corps (11) de profil de plancher, qui relie plusieurs corps (11) de profil de plancher entre eux par liaison avec l'évidement inférieur (5) de guidage,
• au moins un évidement supérieur (7) de guidage, qui relie plusieurs corps (11) de profil de plancher, créé sur les côtés du corps (11) de profil de plancher,
• au moins une saillie supérieure (10) de guidage créée sur les côtés du corps (11) de profil de plancher, qui relie plusieurs corps (11) de profil de plancher entre eux par liaison avec l'évidement supérieur (7) de guidage,
• au moins un évidement médian (9) de guidage, qui relie plusieurs corps (11) de profil de plancher, créé sur les côtés du corps (11) de profil de plancher,
• au moins une saillie médiane (6) de guidage créée sur les côtés du corps (11) de profil de plancher, qui relie plusieurs corps (11) de profil de plancher les uns avec les autres par liaison avec l'évidement médian (9) de guidage,
• au moins une traverse intermédiaire (12) située sous le corps (11) de profil de plancher, qui soutient le corps (11) de profil de plancher en termes de renforcement et de résistance, et empêche sa déformation sous l'effet de la charge, empêchant ainsi la charge d'adhérer à l'intérieur de la cuve de benne basculante,
• au moins un renfort (16) de traverse intermédiaire situé sous le corps (11) de profil de plancher, qui assure le renforcement de la traverse intermédiaire (12), **caractérisé en ce que** le profil de plancher comprend en outre :
• une saillie (14) de guidage en coin créée sous le corps (11) de profil de plancher, qui garantit qu'un élément amortisseur de chocs est fixé au corps (11) de profil de plancher avec le procédé d'inter-verrouillage,
• une surface (13) de coin située sur la surface inférieure de la saillie (14) de guidage de coin et fixant l'élément amortisseur de chocs.

2. Profil de plancher (3) de benne basculante selon la revendication 1, ledit profil de plancher comprenant la saillie (14) de guidage de coin et un coin élastique d'amortissement de chocs (4) positionnée sous la surface (13) de coin entre le châssis de benne basculante et la cuve de benne basculante.

3. Profil de plancher (3) de benne basculante selon la revendication 1, ladite partie du corps (11) de profil de plancher, dans laquelle la traverse intermédiaire (12) est formée, comportant une structure plus mince par rapport aux autres zones.
